# EUROPEAN PATENT APPLICATION

(11) **EP 4 567 163 A1**
(43) Date of publication of application: **11.06.2025**
(21) Application number: 24217895.2
(22) Date of filing: 05.12.2024
(51) Int. Cl.: C25D 17/08, B23H 9/10, C25D 7/00, F01D 5/28

(54) **PLATING TOOL TOOLING SYSTEM**

(30) Priority: 05.12.2023 US 202318529258
(71) Applicant: Chromalloy Gas Turbine LLC, Palm Beach Gardens, Florida 33410 (US)
(72) Inventor: HOPKINS, Zachary, Palm Beach Gardens, FL, 33410 (US); ORAS, Zachary, Palm Beach Gardens, FL, 33410 (US); SEIFERT, Ethan, Palm Beach Gardens, FL, 33410 (US); WHITE, Joseph, Palm Beach Gardens, FL, 33410 (US); ANDERSON, Steven, Palm Beach Gardens, FL, 33410 (US)
(74) Representative: AWA Denmark A/S

(57) **Abstract**

An assembly is provided for movably retaining a component (100) and includes a tooling assembly and a device (114). The tooling assembly (115) includes a tooling base (130) and a carrier (132). The tooling base includes a frame (134) and a guide (142). The frame is configured to retain the component. The guide is associated with a multi-axis pathway. The carrier is movably coupled to the guide. The device is coupled to the carrier and is movable with the carrier along the multi-axis pathway.

## Description

### TECHNICAL FIELD

The disclosure relates generally to the field of tooling. More specifically, aspects of the disclosure relate to tooling that holds a gas turbine component while applying a coating to the component via an aqueous coating process, as indicated in the preamble of claim 1. Plating systems for gas turbines are known, e.g., from US8354146 B2 and US11118281 B2.

### BACKGROUND OF THE DISCLOSURE

A gas turbine engine typically includes a multi-stage compressor coupled to a multi-stage turbine via an axial shaft. Air enters the gas turbine engine through the compressor where its temperature and pressure are increased as it passes through subsequent stages of the compressor. The compressed air is then directed to one or more combustors where it is mixed with a fuel source to create a combustible mixture. This mixture is ignited in the combustors to create a flow of hot combustion gases. These gases are directed into the turbine causing the turbine to rotate, thereby driving the compressor. The output of the gas turbine engine can be mechanical thrust via exhaust from the turbine or shaft power from the rotation of an axial shaft, where the axial shaft can drive a generator to produce electricity.

The compressor and turbine each include a plurality of rotating blades and stationary vanes having an airfoil extending into the flow of compressed air or flow of hot combustion gases. Each blade or vane has a particular set of design criteria which must be met to provide the necessary work to the flow passing through the compressor and the turbine. However, due to the severe nature of the operating environment, especially in the turbine, it is often necessary to cool these blades and vanes. The blades and vanes often utilize complex internal cooling passageways in order to maximize the efficiency of cooling fluid passing therethrough.

### BRIEF SUMMARY OF THE INVENTION

The present invention is defined in claim 1. The following presents a summary of the invention in order to provide a basic understanding of some aspects of the invention. This summary is not an extensive overview of the invention. It is not intended to identify critical elements of the invention or to delineate the scope of the invention. Its sole purpose is to present some concepts of the invention in a simplified form as a prelude to the more detailed description that is presented elsewhere herein.

In an aspect of the disclosure, an assembly for movably retaining a component is disclosed. The assembly includes a tooling assembly and a device. Tooling assembly includes a tooling base and a carrier. The tooling base includes a frame and a guide. The frame is configured to retain the component. The guide is associated with a multi-axis pathway. The carrier is movably coupled to the guide. The device is coupled to the carrier and movable with the carrier along the multi-axis pathway.

In an aspect, according to the preceding aspect, the multi-axis pathway is a helical pathway and the device is an electrode, wherein the device facilitates processing of the component.

In an aspect, according to any one of the preceding aspects, the component is a vane segment having a plurality of vanes; the device includes an electrode with a plurality of plates; at least one of the plurality of plates is positionable adjacent at least one of the plurality of vanes along the multi-axis pathway.

In an aspect, according to any one of the preceding aspects, the carrier has a collar and a curved flange.

In an aspect, according to any one of the preceding aspects, the collar is configured to extend about the guide.

In an aspect, according to any one of the preceding aspects, the guide includes a shaft and a helical key associated with the multi-axis pathway; and the carrier includes a collar that is configured to extend about the guide and includes a keyway that receives the helical key.

In an aspect, according to any one of the preceding aspects, the frame includes a stop configured to restrict movement of the carrier along the guide.

In an aspect, according to any one of the preceding aspects, the component includes at least one tab for supporting the component.

In an aspect, according to any one of the preceding aspects, the at least one tab is removably attached to the tooling base.

In an aspect, according to any one of the preceding aspects, the carrier includes a clamp configured to be movably secured to the guide.

In an aspect, according to any one of the preceding aspects, the device is an anode and the component forms at least part of a cathode when the assembly is used for electroplating of the component.

In an aspect of the disclosure, an assembly for movably retaining a component is disclosed. The assembly includes a tooling assembly and an electrode. The tooling assembly includes a tooling base and a carrier. The tooling base includes a guide. The tooling base is configured to retain the component. The guide includes a shaft and a helical key associated with a helical pathway. The carrier is movably coupled to the guide. The includes a collar configured to extend about the guide. The collar includes a keyway that receives the helical key. The electrode is coupled to the carrier and is movable with the carrier along the helical pathway.

In an aspect, according to the preceding aspect, the component is a vane segment having a plurality of vanes; the electrode has a plurality of plates; at least one of the plurality of plates is positionable adjacent at least one of the plurality of vanes along the helical pathway.

In an aspect, according to any one of the preceding aspects, the carrier has a curved flange.

In an aspect, according to any one of the preceding aspects, the tooling base includes a stop configured to restrict sliding of the carrier along the guide.

In an aspect, according to any one of the preceding aspects, the component includes at least one tab for supporting the component.

In an aspect, according to any one of the preceding aspects, the at least one tab is removably attached to the tooling base.

In an aspect, according to any one of the preceding aspects, the electrode is an anode and the component forms at least part of a cathode when the assembly is used to electroplate the component.

In an aspect of the disclosure, a method of positioning a component relative to an electrode for an electrically driven plating process is disclosed. The method includes retaining the component with a tooling base; coupling a carrier to a guide of the tooling base, the guide being associated with a multi-axis pathway; coupling the electrode to the carrier; and moving the carrier and electrode relative to the component along the multi-axis pathway to position the electrode adjacent the component.

In an aspect, according to the preceding aspect, the component is a vane segment having a plurality of vanes and the electrode has a plurality of plates The plurality of plates is moved relative to the plurality of vanes along the multi-axis pathway to position at least one of the plurality of plates adjacent at least one of the plurality of vanes.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

Illustrative embodiments of the present disclosure are described in detail below with reference to the attached drawing figures and wherein:
FIG. 1 is a perspective view of a turbine blade;
FIG. 2 is a perspective view of a turbine vane;
FIGS. 3A through 3C are views of a vane segment including a plurality of turbine vanes, an inner shroud section, and an outer shroud section;
FIG. 4A is a perspective view of a plating assembly and the vane segment supported on the plating assembly for an electrically driven plating process, showing a tooling assembly and an anode of the plating assembly, with a carrier of the tooling assembly and the anode being located in a retracted position and spaced axially from the turbine vanes;
FIG. 4B is a perspective view of the plating assembly and vane segment similar to FIG. 4A, but with the carrier and anode located in an extended position so that anode plates are inserted into passages between adjacent pairs of turbine vanes;
FIG. 5A is a top view of the plating assembly and vane segment showing the carrier and anode in the retracted position;
FIG. 5B is a top view of the plating assembly and vane segment similar to FIG. 5A, but with the carrier and anode located in the extended position;
FIG. 6A is a fragmentary schematic view of the anode and vane segment of FIGS. 4A-5B, showing the anode and vane segment in the retracted position;
FIG. 6B is a fragmentary schematic view of the plating assembly and vane segment similar to FIG. 6A, but with the anode and vane segment located in the extended position;
FIGS. 7 and 8 are perspective views of the plating assembly of FIGS. 4A-5B, with the plating assembly being exploded to depict a tooling base of the tooling assembly, the carrier, and the anode;
FIGS. 9 and 10 are elevation views of the anode of FIGS. 4A-8;
FIGS. 11-13 are views of the carrier of FIGS. 4A-5B, 7, and 8;
FIGS. 14-17 are views of the tooling base of FIGS. 4A-5B, 7, and 8; and
FIG. 18 is a flowchart illustrating a method of plating a component during an electrically driven plating process using the plating assembly of FIGS. 4A-5B.

### DETAILED DESCRIPTION

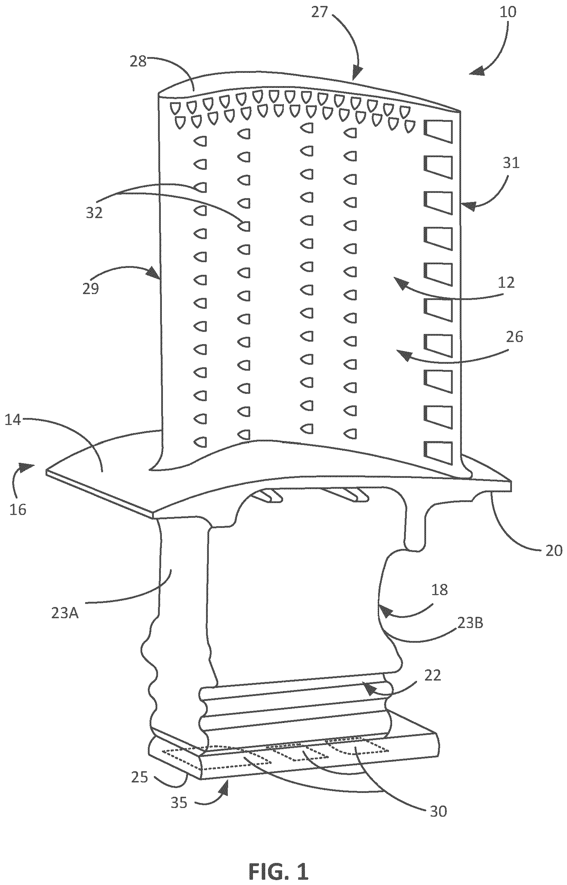

FIG. 1 shows a gas turbine component, such as a gas turbine blade 10. The turbine blade 10 generally includes an airfoil 12 extending from a top or gas path side surface 14 of a platform 16 and a root fixing portion or "dovetail" 18 depending from an undersurface 20 of the platform 16. The dovetail 18 may include one or more serrations or tangs 22 that extend laterally from one side 23A of the dovetail 18 to an opposing side 23B of the dovetail 18. The dovetail 18 may terminate at a terminal or bottom wall 25 that may span between the dovetail sides 23A and 23B. The dovetail 18, including the tangs 22 and the bottom wall 25 thereof, may be adapted for interlocking engagement in a corresponding slot defined in the periphery of a hub of a turbine rotor. The bottom wall 25 may be part of a metering plate 35 that is brazed or otherwise secured to the dovetail 18.

The airfoil 12 may have a pressure side 26, a suction side 27 opposite the pressure side 26, a tip 28, a leading edge 29, and a trailing edge 31. The tip 28 may include or may be configured to interact with a shroud. The shroud may be provided at the tip 28 of each blade 10, or may be a stationary ring including one or more circumferentially extending sections each connected to the gas turbine casing. The shroud(s) may be configured to seal the gap between the tip 28 of the blade 10 and stationary components (e.g., stators) of the turbine, and thereby, may reduce leakage flow between the rotating and stationary components. The airfoil 12, e.g., the pressure side 26 thereof, may come into contact with combustion gases that are at an extremely high temperature. The airfoil 12 or portions thereof may therefore be coated with heat-resistant, wear-resistant, corrosion-resistant, and/or other coatings.

The bottom wall 25 of the dovetail 18 may include one or more air inlet apertures 30. Further, one or more portions of the blade 10 may include cooling holes 32 for cooling the blade 10 during operation. The cooling holes 32 may be provided on one or more surfaces of the airfoil 12, such as the pressure side 26, the suction side 27, the tip 28, the leading edge 29, the trailing edge 31, or a combination thereof. The cooling holes 32 may be circular cooling holes, diffused (e.g., angled) cooling holes, cooling slots, or take on one or more other regular or irregular shapes. Cooling gas may pass through internal cooling channels (not illustrated for ease of description) in the blade 10 and emerge from the cooling holes 32 to create a blanket of thin film over the outer surface of the airfoil 12, thus preventing direct contact of the hot gases and the surfaces of the blade 10. For example, the illustrated blade 10 has air inlet apertures 30 in the bottom wall 25 of the dovetail 18 and cooling holes 32 on the pressure side 26 of the airfoil 12. The blade 10, including the airfoil 12 thereof, may include hollow interior passages for the passage of cooling air, for example, but not limited to, from air inlet apertures 30 to cooling holes 32. Thus, cooling air may be bled from the compressor and channeled into the air inlet apertures 30. This air may exit out the cooling holes 32 to cool one or more portions of the blade 10 during operation. One having skill in the art will understand that different blades may have differing cooling schemes and that the inlet apertures 30 and cooling holes 32 in FIG. 1 are merely exemplary and not intended to be independently limiting.

A gas turbine blade, such as the blade 10, may be manufactured using investment casting, also referred to in the art as lost-wax processing. The investment casting process may involve making a precise negative die of the blade shape that is filled with wax to form the blade shape. If the blade, such as the blade 10, is hollow and has interior cooling passages, a ceramic core in the shape of the cooling passages may be inserted into the middle. The wax blade may be coated with a heat-resistant material to make a shell, and then that shell may be filled with the blade alloy.

Once cast, the blade 10 may undergo one or more finishing processes to prepare the blade 10 for operation. The finishing processes may ensure that the blade 10 has the required aerodynamic profile, as such may impact engine efficiency and fuel consumption. The finishing processes may also make the blade 10 more resistant to fatigue, and thereby increase the lifespan of the blade 10. Some finishing processes may reduce the maintenance requirements associated with the blade 10.

Finishing the blade 10 may include coating one or more surfaces of the blade 10. For example, one or more surfaces of the blade 10 may be blasted with abrasive media to configure these surfaces to accept plating or other types of coatings (a plating or other coating may be a heat-resistant coating, wear-resistant coating, and/or other coating applied to one or more surfaces of the blade 10). Finishing the blade 10 may also include deburring and breaking sharp edges, polishing one or more surfaces of the blade 10 to remove excess material, welding, brazing or otherwise associating a feature (e.g., the metering plate 35) with the blade 10, machining one or more surfaces of the blade 10, and so on.

The blade 10 may also undergo one or more plating processes, such as an electrically driven plating process. Blade 10 may be plated or otherwise coated with a heat-resistant coating, a wear-resistant coating, a corrosion-resistant coating, and/or other coatings. Electrically driven plating processes, namely electroplating (or electrodeposition), are used in the aviation industry to coat various components. As described hereinafter, electroplating may be used to coat the surface of a component with a layer of metal through electrolysis. The electroplating process may include a device in the form of an electrode that facilitates coating of the component via electrolysis. For instance, the plating process may utilize an anode, which acts as a positively charged electrode, and a cathode, which acts as a negatively charged electrode. The component to be plated may form at least part of the cathode and the component may be immersed in an electrolyte solution with the anode. As an electric current passes through the system, the anode releases positive metal ions into the electrolyte solution. These metal ions dissolve in the solution and may then be deposited onto the surface of the component.

The cathode component serves as the site of deposition, where the metal ions are deposited onto the component's surface. In at least some examples, metal may be deposited on the component to produce a uniform and adherent metal coating. Aviation components, such as blades and vanes, may be coated using an electrically driven aqueous process to achieve the desired electrical and corrosion resistance, to reduce wear and friction, to improve heat tolerance, et cetera.

In some examples, one or more portions of the blade 10 may be coated using an electroplating process. The electroplating process for plating the blade 10 (or other components) may employ a cathode and an anode. A component, such as an aviation component (e.g., the blade 10) or other component, may provide at least part of a cathode to effectuate coating via the electroplating process.

The anode may be located in proximity to the cathode, e.g., the blade 10, to create a uniform metal coating. Among other factors, a consistent spacing between the anode and the cathode, e.g., the blade 10, may be necessary to produce a uniform plating layer. In at least some examples, placement of the anode adjacent the blade 10 may involve a manual process in which the anode is formed and oriented manually to achieve a desired spacing between the anode and cathode (e.g., the blade 10).

One problem associated with manual anode placement is that such a process may be labor intensive and time consuming. Moreover, consistent spacing between the anode and cathode (e.g., blade 10) is often challenging to achieve using manual anode placement. Skilled labor may be required to meet requirements for plating quality and consistency. If the plating layer is determined to have an inconsistent thickness (or if the plating layer includes any other flaws), the blade 10 may require rework to correct any problems with the plating layer. Because rework may be time consuming and expensive, efficiencies can be gained by minimizing the need for rework.

A mechanism (not shown) may be used to selectively lower the cathode and anode into a tank (not shown) for suspension within a plating solution. In some examples, the component is at least partly submerged within a "P-salt" platinum solution during the electroplating process. In other examples, an alternative electroplating solution may be used to apply one or more plating layers to the at least partly submerged component.

In at least certain non-limiting aspects of the disclosure, blade 10 may have a coating applied thereto that is not a plating layer and is not applied via electrolysis. Examples of such coatings may include a heat-resistant coating, a wear-resistant coating, a corrosion-resistant coating, and/or other coatings.

For coatings that may be applied to the blade 10 without using electrolysis, it will be understood that the blade 10 may not be submerged in an electroplating solution. Moreover, instead of using an anode to facilitate application of the coating, a device (such as a nozzle or other mechanical device) may be used to spray, pour, spread, or otherwise apply the coating onto the blade 10.

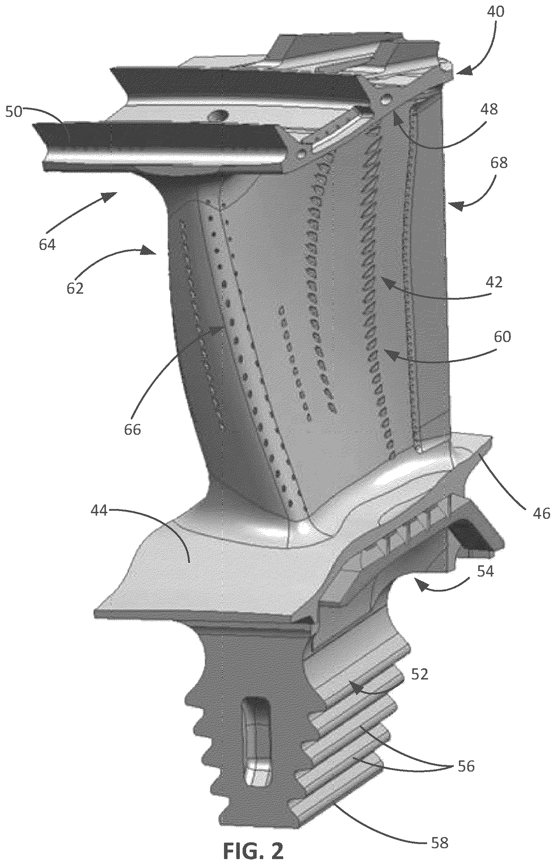

Turning to FIG. 2, another gas turbine component includes a gas turbine vane 40 according to an aspect of the disclosure. The turbine vane 40 generally includes an airfoil 42 extending between a top or gas path inner surface 44 of an inner shroud section 46 and a bottom or gas path outer surface 48 of an outer shroud section 50. Turbine vane 40 further includes a root dovetail 52 depending from an undersurface 54 of the inner shroud section 46. The dovetail 52 may include one or more serrations or tangs 56 that extend laterally from one side of the dovetail 52 to an opposing side of the dovetail 52. The dovetail 52 may terminate at a terminal or bottom wall 58 that may span between the dovetail sides100. The dovetail 52, including the tangs 56 and the bottom wall 58 thereof, may be adapted for interlocking engagement in a corresponding slot defined in a housing of the gas turbine engine.

The airfoil 42 may have a pressure side 60, a suction side 62 opposite the pressure side 60, a tip 64, a leading edge 66, and a trailing edge 68. The tip 64 may include the outer shroud section 50. The inner and outer shroud sections 46 and 50 may extend circumferentially and include portions of respective stationary rings, which are connected to the gas turbine casing. The airfoil 42, e.g., the pressure side 60 thereof, may come into contact with combustion gases that are at an extremely high temperature. The airfoil 42 or portions thereof may therefore be plated or otherwise coated with a heat-resistant coating, a wear-resistant coating, a corrosion-resistant coating, and/or other coatings. Similar to the blade 10, turbine vane 40 may be electroplated and may form at least part of a cathode for the electroplating process.

The plating process associated with turbine vane 40 may utilize manual anode placement techniques similar to those used for blade 10. Furthermore, the deficiencies associated with manual anode placement (which are noted above for blade 10) may be applicable to manual techniques for placement of an anode relative to turbine vane 40.

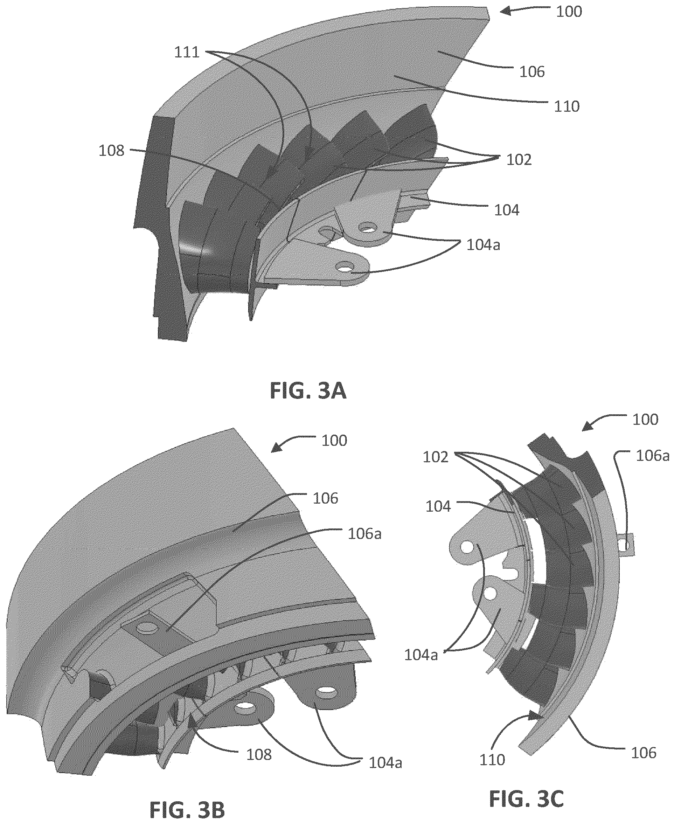

FIGS. 3A-3C show a shrouded vane segment or cluster 100 (hereinafter "vane segment 100"), according to some aspects of the disclosure. Vane segment 100 includes a plurality of vanes 102, an inner shroud section 104, and an outer shroud section 106. The inner and outer shroud sections 104 and 106 present, respectively, a gas path inner surface 108 and a gas path outer surface 110.

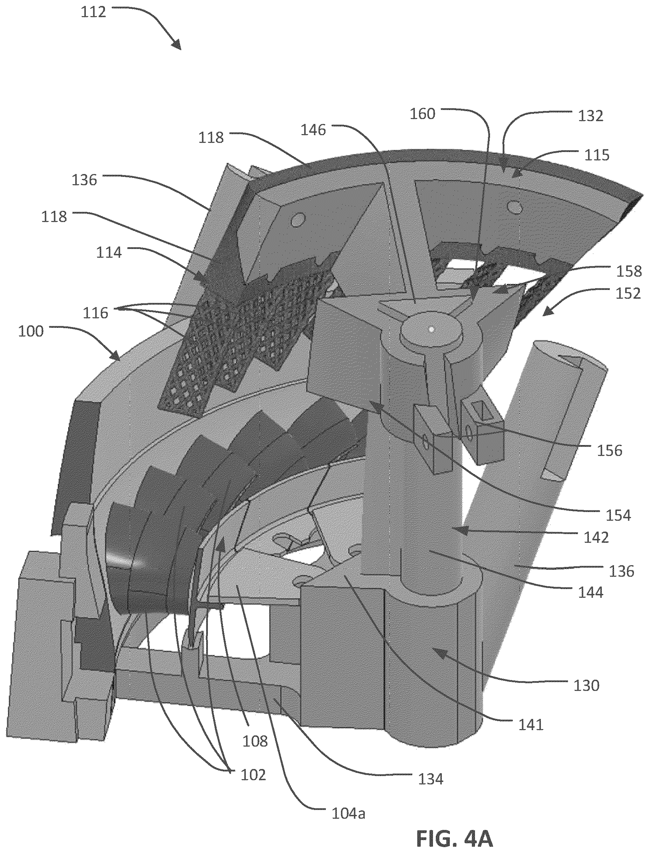

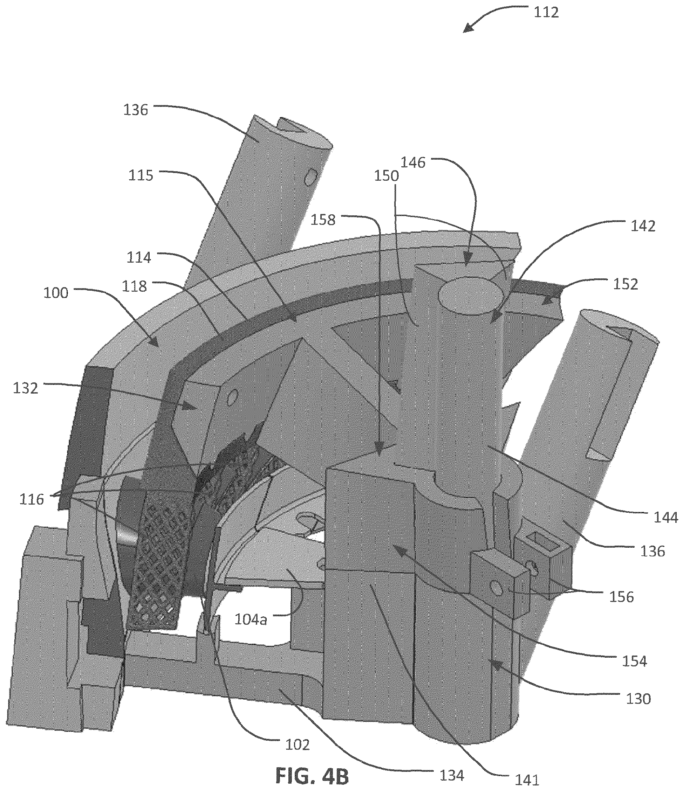

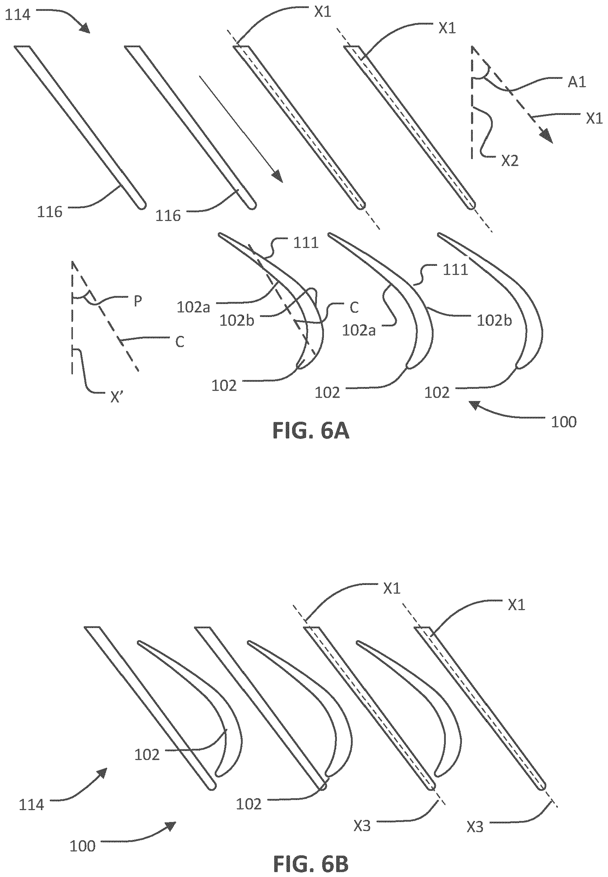

With reference to FIGS. 4-17, in certain aspects of the embodiments, vanes 102 may be attached to and cooperatively supported by the shroud sections 104 and 106. The vane segment 100 may include pairs of adjacent vanes 102, with each pair having a passage 111 extending therebetween (see FIG. 6A). In particular, each pair of adjacent vanes 102 presents a pressure surface 102a and a suction surface 102b (see FIGS. 6A and 6B) that oppose one another and cooperate with gas path inner and outer surfaces 108 and 110 to define the respective passage 111 (see FIGS. 3A and 6A).

Similar to blade 10 and turbine vane 40, vane segment 100 may be plated via an electroplating process. The plating process for vane segment 100 may also utilize manual anode placement techniques as described above. In particular, a series of anodes (not shown) may be formed and each anode may be manually oriented adjacent respective vanes 102 of the vane segment 100. The manual placement of anodes relative to each turbine vane 102 of the vane segment 100 may be laborious and time consuming. Further, it may be challenging to achieve precise and consistent anode positioning relative to each vane 102 associated with the vane segment 100.

The fixed arrangement of vanes 102 in the vane segment 100 may further exacerbate challenges associated with manual anode placement. For instance, the proximity of adjacent vanes 102 may restrict access to at least some pressure and suction surfaces of the vanes 102. Specifically, because each vane 102 in the vane segment 100 may be in close proximity to one or more adjacent vanes 102, it may be difficult for a technician to precisely locate an anode element between a pair of adjacent vanes 102. Inconsistent positioning between anode members and vanes 102 may cause the plating layer on the vanes 102 to have an inconsistent thickness, and thereby require the vanes 102 to be replated and/or otherwise repaired.

Moreover, vanes 102 of vane segment 100 may be angled relative to a turbine axis X' (see FIG. 6A). In this angled vane configuration, a chord C of the vane 102 may be angled relative to the turbine axis X' to define an airfoil pitch angle P (see FIG. 6A). If the anode members are inserted between the vanes 102 in a vertical direction, e.g., along axis X', the anode members may contact the vanes 102 and undesirably damage the anode members and/or the vanes 102. Consequently, it may be desirable to insert the anode members along an insertion direction oblique to the turbine axis X' (for instance, an insertion direction that is substantially parallel to the chord C), as such may ensure that the anode members do not contact the vanes 102 and damage the anode members and/or the vanes 102.

Turning to FIGS. 4A-6B, according to an aspect of the disclosure, an assembly 112 is operable to facilitate processing (e.g., electroplating, coating, machining, et cetera) of a component, such as an aviation component or other component. In some examples, the assembly 112 may movably retain the component for processing. In some examples, assembly 112 is operable to facilitate plating of a component (such as vane segment 100) during an electrically driven plating process. The assembly 112 may be configured to support and retain the component and may include an anode 114 adjacent to the component during the plating process. In some examples of the embodiments, the assembly 112 may include the anode 114 and a tooling assembly 115. As will be explained, the tooling assembly 115 may facilitate precise relative shifting between the component and the anode 114.

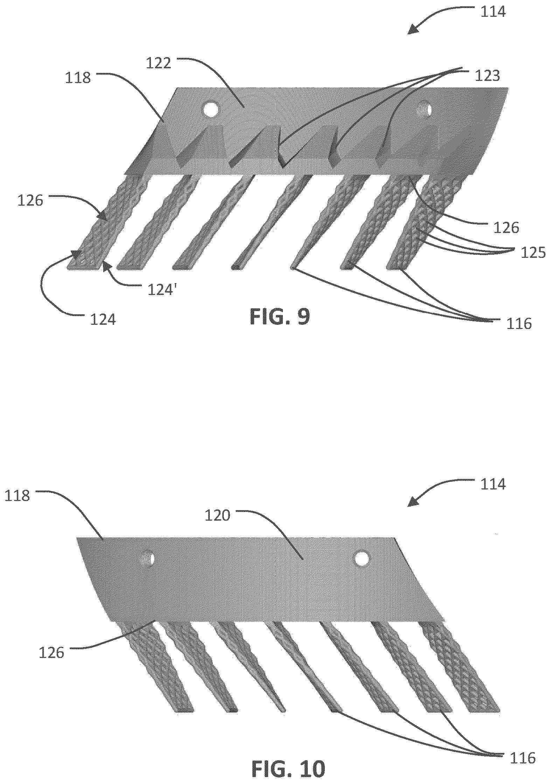

The anode 114 may have a unitary or a non-unitary construction and may include a series of mesh anode plates 116 attached to and supported by an anode bar 118 (see FIGS. 4A, 9, and 10). Anode bar 118 may have an arcuate shape that conforms to the curved shape of the vane segment 100. More specifically, anode bar 118 may have a radially outer surface 120 (see FIG. 10) operable to be located adjacent to the gas path outer surface 108 (FIG. 3A). Anode bar 118 may have a radially inner groove 122 (see FIG. 9) with a series of upright slots 123. The slots 123 may be configured to receive and be indexed with the tooling assembly 115. In other examples, the anode bar 118 may be alternatively configured (e.g., for suitable plating of an adjacent component). For instance, other examples of the anode bar 118 may have a substantially linear shape (such that the anode bar 118 is not curved). In still other examples, the anode bar 118 may include a plurality of discrete sections that are removably attached to one another. In at least certain non-limiting aspects of the embodiments, the anode 114 may include various anode types, such as conformal mesh type, nonconformal mesh type, rod type, conformal plate type, nonconformal plate type, and/or point type.

At least one of the anode plates 116 may have opposite plate surfaces 124 and 124' and a generally uniform pattern of holes 125 that extend from one plate surface 124 to the other plate surface 124' (see FIG. 9). Anode plates 116 may be shaped so that the plate surfaces 124, 124' are curved (that is, the surfaces are not planar). In various aspects, one or more anode plates 116 may have an alternative configuration (e.g., for suitable plating of an adjacent or another component). In at least certain non-limiting aspects of the embodiments, the anode plate 116 may have an alternative array of holes 125 or alternative plate surface shapes. In some examples, one or more anode elements may have structure other than a plate shape, such as a generally spherical, pyramidal, or other shape.

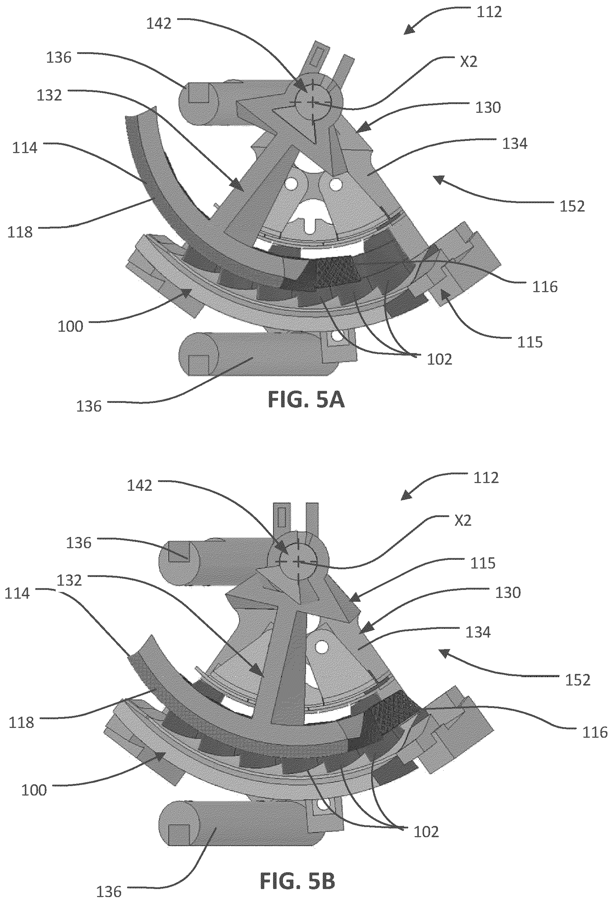

Each anode plate 116 may present a plate axis X1 (see FIG. 6A). The plate axis X1 and a guide axis X2 of the tooling assembly 115 may cooperatively define a plate angle A1. Anode plates 116 may be arranged in series along the length of the anode bar 118 and may project axially from a lower margin 126 (see FIGS. 9 and 10) of the anode bar 118. The anode plates 116 may be spaced apart from one another and spaced circumferentially about the guide axis X2 (see FIGS. 5A and 5B). As will be explained, one or more anode plates 116 may each be positionable adjacent to and at least partly removably intercalated between a pair of vanes 102 of vane segment 100.

In aspects of the disclosure, at least part of the anode 114 (such as anode plates 116) may include a titanium material to facilitate effective plating of one or more components. However, in other examples, the assembly 112 may have one or more anode elements that include an alternative anode material, such as a stainless steel. At least parts of the anode 114 may be manufactured via a printing process such as laser bed powder fusion, a binder jet process, or another suitable manufacturing process.

According to an aspect of the disclosure, tooling assembly 115 may be operable to support and retain the vane segment 100 and anode 114 adjacent to the vane segment 100 during the plating process. Tooling assembly 115 may facilitate insertion and removal of the anode 114 relative to the vane segment 100 without contacting or damaging the anode 114 and/or the vane segment 100.

Referring to FIGS. 4A-4B, 7, 8, 11, and -17, tooling assembly 115 may include a tooling base 130 and a shiftable carrier 132 (see FIG. 4A and 4B). The tooling base 130 may include a frame 134 and arms 136. Frame 134 may be used to support the shiftable carrier 132, vane segment 100, and the anode 114. Arms 136 may be attached to frame 134 for mounting the tooling base 130 onto a mechanism (not shown) that selectively lowers the vane segment 100, tooling assembly 115, and anode 114 into a tank (not shown) for suspension within a plating solution. Insertion of the anode 114 relative to the vane segment 100 may occur prior to submerging the anode 114 and vane segment 100 in the plating solution.

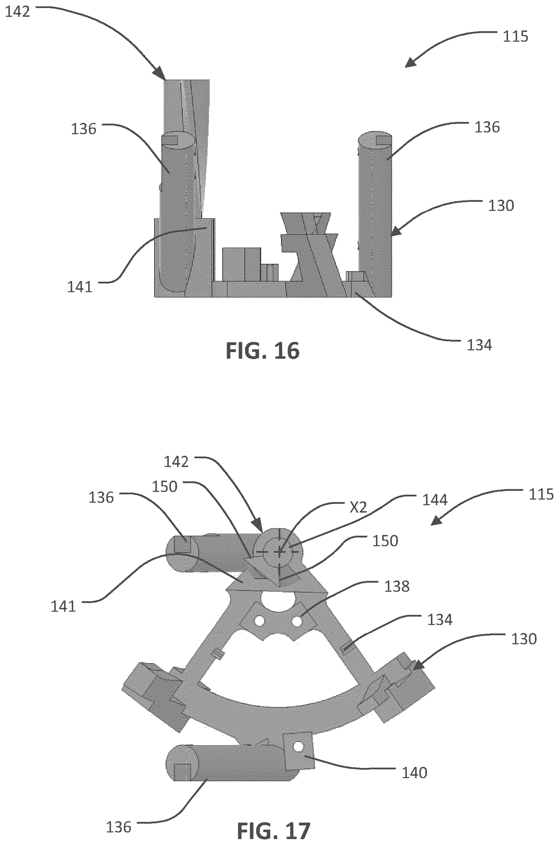

Tooling base 130 may also include bosses 138 and 140 (see FIG. 17) associated with the frame 134 for mounting and retaining the vane segment 100 relative to the tooling base 130. Tooling base 130 may further include a stop 141 (see FIGS. 4A and 17) configured to restrict movement (e.g., sliding) of the carrier 132 along the guide axis X2.

In use, vane segment 100 may be removably secured on the tooling base 130 prior to plating of the vane segment 100. The vane segment 100 may be secured by removably attaching tabs 104a and 106a (see FIGS. 3A-3C) of the shroud sections 104 and 106 to respective bosses 138 and 140 (see FIG. 17) with suitable fasteners (not shown). As a result, tabs 104a and 106a may support vane segment 100 relative to the tooling base 130.

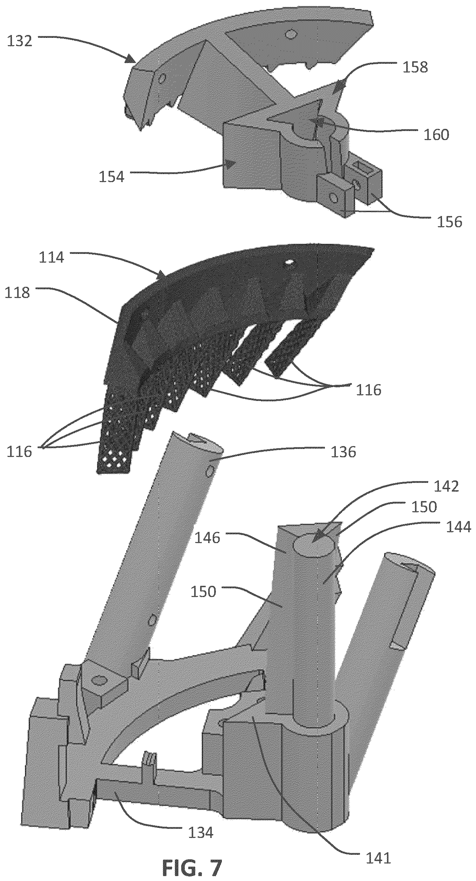

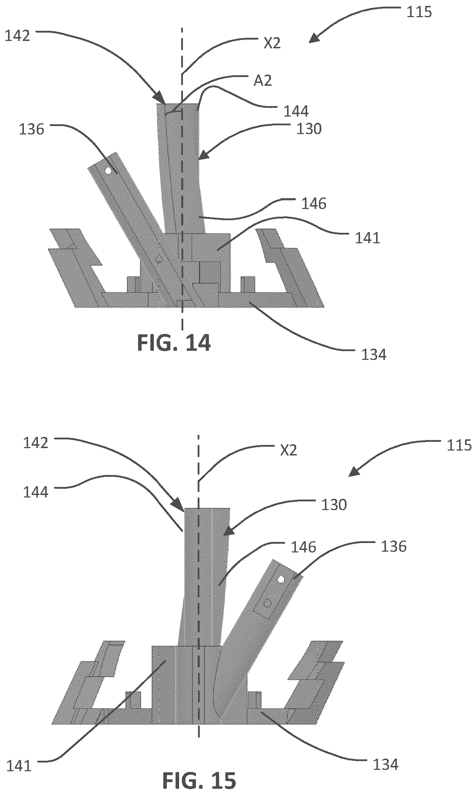

Tooling base 130 may further include a guide 142 that shiftably supports the carrier 132 and the anode 114 (see FIGS. 4A and 4B). That is, carrier 132 may be movably coupled to the guide 142. Guide 142 may include an elongated shaft 144 and a guide element or helical key 146 (hereinafter "guide element 146") integrally formed with one another (see FIGS. 4A, 14, and 17). In some examples, the shaft 144 and guide element 146 (see FIG. 4A) also define and extend along the guide axis X2 (FIGS. 14 and 15). Guide element 146 may have a helical shape (that is, a spiral shape, see FIG. 4B), where at least part of the guide element 146 extends along and defines a multi-axis pathway (e.g., a helical pathway). The guide element 146 may have a dovetail profile shape that is substantially constant along the length of the guide element 146. In some aspects of the disclosure, guide element 146 may include a helical key with angled guide surfaces 150 (see FIGS. 4B and 17) that taper toward one another in a radially inward direction toward the shaft 144. As will be discussed, the guide element 146may be slidably engaged with a complemental helical keyway 160 (FIG. 7) of the carrier 132 so that the guide 142 and carrier 132 cooperatively provide a multi-axis drive 152 (FIG. 4A, 4B, 5A, and 5B) that produces off-axis relative movement between the vane segment 100 and the anode 114 as the carrier 132 moves axially along the guide 142.

In at least certain non-limiting aspects of the embodiments, guide 142 may have one or more alternatively configured guide elements 146. For instance, an alternative guide element 146 may have any one of various alternative profile shapes (such as an arcuate shape, a rectangular shape, or another polygonal shape, not illustrated for ease of description).

Still other alternative guide elements 146 are within the scope of at least certain aspects of the disclosure. In some examples, the guide element 146 of the guide 142 may include a groove or keyway operable to receive a key or other projection associated with the carrier 132. In still other examples, the multi-axis drive 152 may be devoid of a helical guide structure. For instance, an alternative guide element 146 may define a multi-axis pathway that is not helical (such as a "zig-zag" pathway or other non-helical curvilinear pathway).

Tooling assembly 115 may include a chemically resistant polymer suitable for exposure to a plating process. For example, one acceptable chemically resistant polymer suitable for exposure to a plating process is a polypropylene material. It is also within the scope of the present disclosure for the tooling assembly 115 to include an alternative synthetic resin material, such as another polymer material, particularly a chemically resistant polymer suitable for exposure to a plating process.

The shiftable carrier 132 may be used to shiftably support the anode 114 relative to the tooling base 130, while the tooling base 130 supports the vane segment 100. The carrier 132 may be shifted along the guide axis X2 between a retracted position (see FIG. 4A) where the carrier 132 is axially spaced from the vane segment 100, and an extended position (see FIG. 4B) where the carrier 132 is located adjacent the vane segment 100. Carrier 132 broadly includes a guided element or clamp 154 (hereinafter "guided element 154", see FIGS. 4A-5B and 11-13) that operably engages and is movably secured to the guide 142 of tooling base 130. Guide 142 may be movably engaged with the guided element 154 and may permit the carrier 132 to move axially along the guide 142.

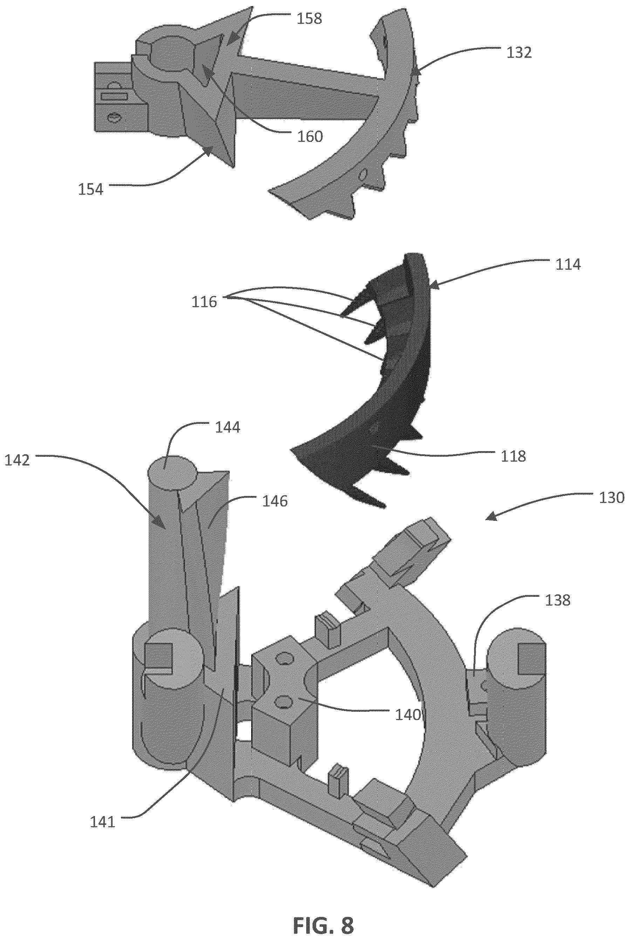

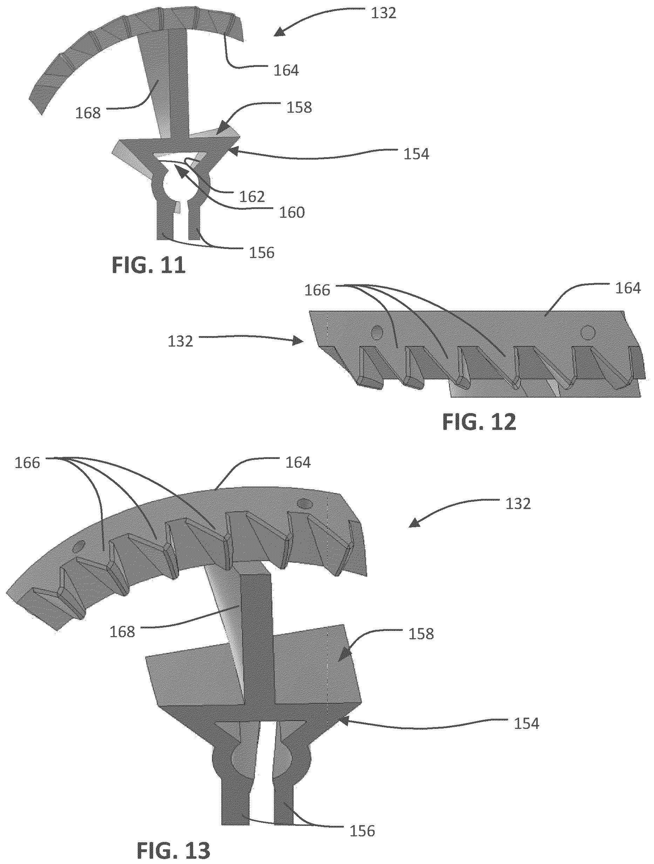

Guided element 154 may include a pair of opposed clamp arms 156 (see FIGS. 4A and 11) that extend around the shaft 144 and guide element 146. Guided element 154 may include a collar or carrier element 158 (hereinafter "collar 158", see FIG. 7) that extends about the guide 142 (see FIGS. 4A and 4B). Collar 158 may interconnect the clamp arms 156 and be integrally formed therewith. Collar 158 may include a helical keyway 160 (see FIGS. 7 and 8) with a dovetail profile shape that is substantially constant along the length of the guided element 154. In particular, helical keyway 160 (see FIG. 11) may have angled guide surfaces 162 that taper toward one another in a radially inward direction toward the shaft 144.

Guide element 146 (see FIG. 4A) and helical keyway 160 (see FIG. 8) may be complementally shaped and slidably engaged with one another so that the guide 142 and carrier 132 cooperatively provide the multi-axis drive 152. The multi-axis drive 152 may produce off-axis relative movement between the vane segment 100 and the anode 114 as the carrier 132 moves axially along the guide 142.

In use, the guide element 146 and helical keyway 160 may have respective helical elements (such as guide element 146 and guided element 154) that are complementally shaped and slidably engaged with each other to move the shiftable carrier 132 about the guide 142 as the shiftable carrier 132 moves axially along the guide 142. For example, the shiftable carrier 132 may slide axially along the guide 142 while also rotating about the guide 142. The guide element 146 defines a pitch angle A2 (see FIG. 14) relative to the guide axis X2. Pitch angle A2 may be configured to facilitate helical anode movement through the passage 111 (see FIG. 6A) defined between a respective pair of vanes 102. The plate angle A1 (FIG. 6A) associated with anode plate 116 and the pitch angle A2 (FIG. 14) may each be oblique angles.

In at least certain non-limiting aspects of the embodiments, a carrier 132 may have one or more alternatively configured guided elements 154. For instance, an alternative helical guided element 154 may have any one of various alternative profile shapes (such as an arcuate shape, a rectangular shape, or another polygonal shape).

Still other alternative carrier guided elements 154are within the scope of at least certain aspects of the disclosure. In aspects, the guided element 154 of the carrier 132 may include a key or other projection operable to be received by a keyway or other groove associated with the tooling base.

In some examples, the multi-axis drive 152 may be devoid of a helical guide structure. For example, aspects of a multi-axis drive 152 may include one or more transmission (drive) elements (such as a link, cam, gear, worm, sprocket, chain, pulley, belt, etc.) for providing relative axial and off-axis movement between anode and cathode elements. It will also be appreciated that the drive 152 may include a motor (such as an electric, hydraulic, or pneumatic motor) for driving the anode and cathode (e.g., the component to be plated) relative to one another.

Carrier 132 may include a curved flange 164 (FIGS. 11-13), teeth 166, and a radially extending rib 168 that extends radially outwardly from the guide 142 (see FIG. 4A) to the curved flange 164. The carrier 132 may extend radially outwardly relative to the guide 142 and may be rotatable about the guide 142. The carrier 132 may provide a cantilevered structure that enables the carrier 132 to support the anode 114 relative to the guide 142 and the vane segment 100 while facilitating precise rotational and axial movement of the anode 114 relative to the vane segment 100. Thus, the anode 114 (or another device that facilitates processing of the vane segment 100 or another component) may be coupled to the carrier 132 and movable with the carrier 132 along the multi-axis pathway (e.g., along a helical pathway).

At least parts of the carrier 132 may be formed of a chemically resistant polymer suitable for exposure to a plating process. An example of a suitable chemically resistant polymer suitable for exposure to a plating process, as embodied by the disclosure, includes polypropylene material. In some aspects of the disclosure, carrier 132 may be formed entirely of polypropylene. The process for forming carrier 132 may include a stereolithography process, a binder jet process, or another suitable manufacturing process. It is also within the scope of the disclosure for the carrier 132 to include an alternative synthetic resin material, such as another polymer material, particularly a chemically resistant polymer suitable for exposure to a plating process.

As noted above, the groove 122 and slots 123 (FIG. 9) of the anode 114 may be configured to receive and be aligned with the carrier 132 (FIG. 4A). Specifically, teeth 166 (FIG. 12) of the carrier 132 may be removably received in corresponding slots 123 to align the anode 114 relative to the carrier 132. The anode 114 and carrier 132 may be removably secured to one another by one or more fasteners (not shown for ease of illustration).

Thus, the anode 114 may be coupled to and supported by the carrier 132 while the vane segment 100 is attached to and retained by the tooling base 130. However, in other examples, the anode 114 may be attached directly to the tooling base 130 while the vane segment 100 is attached to the carrier 132. In these examples, the vane segment 100 may be shiftable with the carrier 132 along the guide 142.

As noted, the anode plates 116 may each be positioned adjacent to and at least partly removably intercalated between a pair of vanes 102 of the vane segment 100 during operation of the tooling assembly 115. With the anode 114 and carrier 132 being attached to each other, the anode 114 and carrier 132 may be shifted together and selectively positioned at locations along the guide 142. For instance, when the carrier 132 is located in the retracted position (see FIGS. 4A, 5A, and 6A), the anode 114 may be spaced axially from the vanes 102. Alternatively, when the carrier 132 is located in the extended position (see FIGS. 4B, 5B, and 6B), the plates 116 of anode 114 may be inserted relative to the vane segment 100 so that the anode plates 116 are at least partly removably intercalated between pairs of vanes 102 of the vane segment 100.

The anode 114 and carrier 132 may be selectively shifted between the retracted position (see FIG. 4A) and the extended position (see FIG. 4B) for removable insertion of the anode 114 relative to the vane segment 100. To insert the anode 114 relative to the vane segment 100, carrier 132 may be advanced from the retracted position to the extended position along an insertion direction (which extends along the guide axis X2, see FIG. 6A) so that the anode plates 116 are at least partly inserted into the passages 111. In the extended position, stop 141 may engage the carrier 132 (see FIG. 4B) to restrict further insertion of the anode plates 116 by restricting further sliding of the carrier 132 in the insertion direction along the guide 142. To remove the anode 114 from the vane segment 100, the carrier 132 may be advanced a direction opposite the insertion direction (that is, in a direction away from the vane segment 100).

When the anode 114 is inserted relative to the vane segment 100, plates 116 may be at least partly located within passages 111 defined between respective pairs of vanes 102. Also, anode bar 118 may be located adjacent the gas path surfaces 108 and 110. Thus, during an electroplating process, the anode bar 118 may facilitate plating of at least part of the surface 110, while the anode plates 116 may facilitate plating of at least part of the pressure surfaces 102a and suction surfaces 102b of the vanes 102.

The anode plate presents a plate axis X1 that may be substantially aligned with a passage axis X3 defined by the passage 111 (see FIGS. 6A and 6B). Helical elements (such as guide element 146 and guided element 154) may facilitate helical anode movement of the anode plate along the passage axis X3.

In other examples, one or more elements other than portions of the anode may be removably intercalated between components of an alternative cathode. For instance, one or more alternative airfoil components (such as a blade, vane, other airfoil element) or other non-airfoil components may plated or otherwise treated (e.g., by coating).

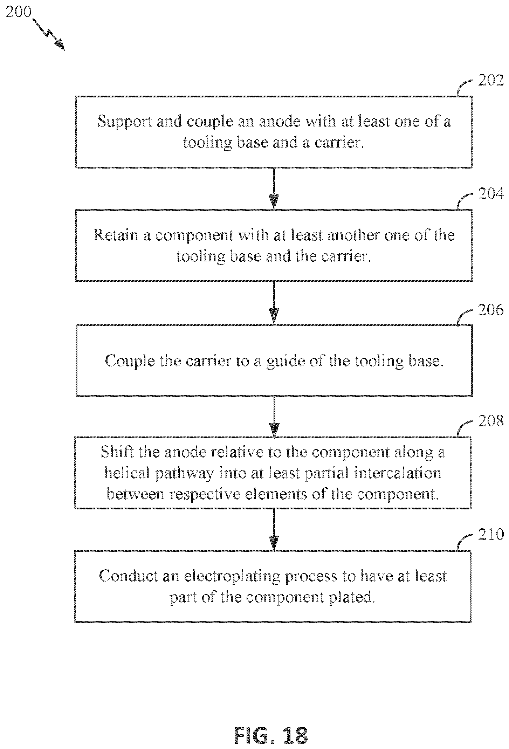

FIG. 18 shows a flowchart illustrating a method 200 of plating a component, such as the vane segment 100, during an electrically driven plating process. At step 202, an anode 114 may be coupled to and supported by at least one of a tooling base 130 and a carrier 132. At step 204, the component may be attached to and retained by at least another one of the tooling base 130 and the carrier 132. At step 206, the carrier 132 may be coupled to a guide 142 of the tooling base 130. At step 208, the anode 114 may be shifted relative to the component along a helical pathway into at least partial intercalation between respective elements of the component. In some examples, step 208 may include the step of shifting multiple anode elements along the helical pathway into at least partial intercalation between respective pairs of component elements. In some examples, step 208 may include the step of shifting anode 114 and carrier 132 from the retracted position to the extended position for removable insertion of the anode 114 relative to the vane segment 100.

At step 210, an electroplating process may be conducted to have at least part of the component plated.

Electroplating during step 210 may be used to coat surfaces of vane segment 100 with a thin layer of metal. The plating process may utilize the anode 114, which acts as a positively charged electrode, and vane segment 100, which acts as a cathode. The component (such as vane segment 100) may be at least partly submerged within a "P-salt" platinum solution during the electroplating process. In other examples, an alternative electroplating solution may be used to apply one or more plating layers other than platinum to the at least partly submerged component. As an electric current passes through the system, the anode 114 releases positive metal ions into the P-salt solution. These metal ions dissolve in the solution and are then deposited onto the surface of the component. After step 210, the component may be removed from the assembly 112.

During the electroplating process, the anode bar 118 may be used to plate at least part of the surface 110, while the anode plates 116 may be used to plate at least part of the pressure surfaces 102a and suction surfaces 102b of the vanes 102. For example, platinum may be deposited on the vane segment 100 to produce a uniform and adherent platinum coating. Anode 114 may be located in proximity to the vane segment 100 to create a uniform metal coating. Among other factors, a consistent spacing between the anode 114 and the vane segment 100 may be developed to produce a uniform plating layer on the vane segment 100. In still other examples, one or more coating layers other than a plating layer may be applied to a component via an electrically driven coating process.

In at least certain non-limiting aspects of the disclosure, the assembly 112 may be used to facilitate processing of the component via a process other than electroplating. For example, the assembly 112 may facilitate coating of vane segment 100 or another component via a nozzle or other means. Such coatings may include a heat-resistant coating, a wear-resistant coating, a corrosion-resistant coating, and/or other coatings. In these examples, assembly 112 may not be associated with an electrode (e.g., an anode or a cathode).

Many different arrangements of the various components depicted, as well as components not shown, are possible without departing from the spirit and scope of the present disclosure. Embodiments of the present disclosure have been described with the intent to be illustrative rather than restrictive. Alternative embodiments will become apparent to those skilled in the art that do not depart from its scope. A skilled artisan may develop alternative means of implementing the aforementioned improvements without departing from the scope of the present disclosure.

It will be understood that certain features and subcombinations are of utility and may be employed without reference to other features and subcombinations and are contemplated within the scope of the claims. Not all steps listed in the various figures need be carried out in the specific order described.

## Claims

1. An assembly (112) for movably retaining a component (100), the assembly (112) comprising:
a tooling assembly (115) having:
a tooling base (130), the tooling base (130) including a frame (134) and a guide (142), the frame (134) configured to retain the component (100), the guide (142) associated with a multi-axis pathway; and
a carrier (132) movably coupled to the guide (142); and
a device (114) coupled to the carrier (132) and movable with the carrier (132) along the multi-axis pathway.

2. The assembly of claim 1, wherein the multi-axis pathway is a helical pathway and the device (114) is an electrode, wherein the device (114) facilitates processing of the component (100).

3. The assembly of claim 1, wherein:
the component (100) is a vane segment having a plurality of vanes (102);
the device (114) includes an electrode with a plurality of plates (116); and
at least one of the plurality of plates (116) is positionable adjacent at least one of the plurality of vanes (102) along the multi-axis pathway.

4. The assembly of claim 1, wherein the carrier (132) has a collar (158) and a curved flange (164).

5. The assembly of claim 4, wherein the collar (158) is configured to extend about the guide (142).

6. The assembly of claim 1, wherein:
the guide (142) includes a shaft (144) and a helical key (146) associated with the multi-axis pathway; and
the carrier (132) includes a collar (158) that is configured to extend about the guide (142) and the carrier (132) includes a keyway (160) that receives the helical key (146).

7. The assembly of claim 1, wherein the frame (134) includes a stop (141) configured to restrict movement of the carrier (132) along the guide (142).

8. The assembly of claim 1, wherein the component includes at least one tab (104(a)).

9. The assembly of claim 8, wherein the at least one tab (104(a)) is removably attached to the tooling base (130).

10. The assembly of claim 1, wherein the carrier (132) includes a clamp (154) configured to be movably secured to the guide (142).

11. The assembly of claim 2, wherein the device (114) is an anode and the component (100) forms at least part of a cathode when the assembly is used for electroplating of the component (100).
